# EUROPÄISCHE PATENTSCHRIFT

(11) **EP 1 237 794 B1**
(45) Veröffentlichungstag und Bekanntmachung des Hinweises auf die Patenterteilung: **27.08.2003**
(21) Anmeldenummer: 00991144.7
(22) Anmeldetag: 05.12.2000
(51) Int. Cl.: B65D 35/22, B29D 23/20, B29C 53/50, B65B 51/26

(54) **Vorrichtung zur Herstellung von Zweikammerbehältern**
Apparatus for manufacturing twin-chambered containers
Dispositif de fabrication de contenants à deux chambres

(30) Priorität: 07.12.1999 DE 19958920
(43) Veröffentlichungstag der Anmeldung: 11.09.2002
(73) Patentinhaber: AISA AUTOMATION INDUSTRIELLE SA, 1896 Vouvry (CH)
(72) Erfinder: KELLER, Gerhard, CH-1805 Jongny (CH)
(74) Vertreter: Zellentin, Rüdiger, Dr.
(86) Internationale Anmeldenummer: EP0012214
(87) Internationale Veröffentlichungsnummer: WO01042091

(56) Entgegenhaltungen:
- EP-A- 0 905 049
- WO-A-97/18138
- DE-A- 1 910 032
- FR-A- 1 209 359
- FR-A- 2 623 170
- US-A- 2 661 870
- US-A- 4 757 668
- US-A- 5 219 373
- US-A- 5 954 231

## Beschreibung

Die Erfindung betrifft eine Vorrichtung zur Herstellung von Zweikammerbehältern mit einem Innendorn und einem Außendorn mit größerem Durchmesser, wobei der Innendorn im Außendorn ein- und ausfahrbar angeordnet ist, einem Formhohlraum für ein Kopfstück und einem Materialgeber zur Zuführ einer erwärmten Materialportion eines thermoplastischen Kunststoffes in den Formhohlraum einer Pressform.

Eine derartige Vorrichtung ist aus der US-A- 5 219 373 bekannt. Hierbei werden zwei separat hergestellte einstückige Schläuche mit unterschiedlichen Durchmessern auf ihnen jeweils entsprechende innere bzw. äußere Dorne aufgeschoben, wonach durch ein Düsenstück mittels Spritzgießen ein Kopfstück mit gemeinsamer Ausgabeöffnung aufgebracht und gleichzeitig mit beiden Schlauchenden verbunden wird. Dieses Verfahren ist durch viele Einzelschritte zeitaufwendig und lässt sich daher nicht mit hohen Stückzahlen pro Zeiteinheit herstellen, insbesondere da die Schläuche zunächst einzeln hergestellt und in die Vorrichtung koordiniert eingeführt werden müssen.

Aufgabe der Erfindung ist es, eine Vorrichtung zur Herstellung von Zweikammerbehältem anzugeben, insbesondere als nicht wieder verschließbare Einmalanwendungsverpackung, die schön aussieht und einfach und schnell herstellbar ist.

Diese Aufgabe wird bei einer Vorrichtung mit den Merkmalen des Oberbegriffs des Anspruchs 1 durch die kennzeichnenden Merkmale des Anspruchs 1 gelöst.

Eine vorteilhafte Ausgestaltung ist dem Unteranspruch zu entnehmen.

Nachstehend wird die Erfindung anhand eines Ausführungsbeispiels einer Vorrichtung zur Herstellung von Zweikammerbehältem näher erläutert. Es zeigt:
- Fig. 1: einen Zweikammerbehälter in Seitenansicht;
- Fig. 2: den in Fig. 1 dargestellten Zweikammerbehälter in Draufsicht von oben;
- Fig. 3: eine Vorrichtung zur Herstellung des Zweikammerbehälters in schematischer Darstellung;
- Fig. 4a, b, c: ein Dornsystem und sein Zusammenwirken mit einem Preßwerkzeug;
- Fig. 5: eine Ansicht von oben auf das Domsystem mit Schläuchen;
- Fig. 6: die Zuführung eines Folienbandes um einen Dorn zur Herstellung einer Seitennaht;
- Fig. 7: die Bildung einer Seitennaht an einer um einen Dorn gewickelten Folie und deren Abtrennung vom Folienband.

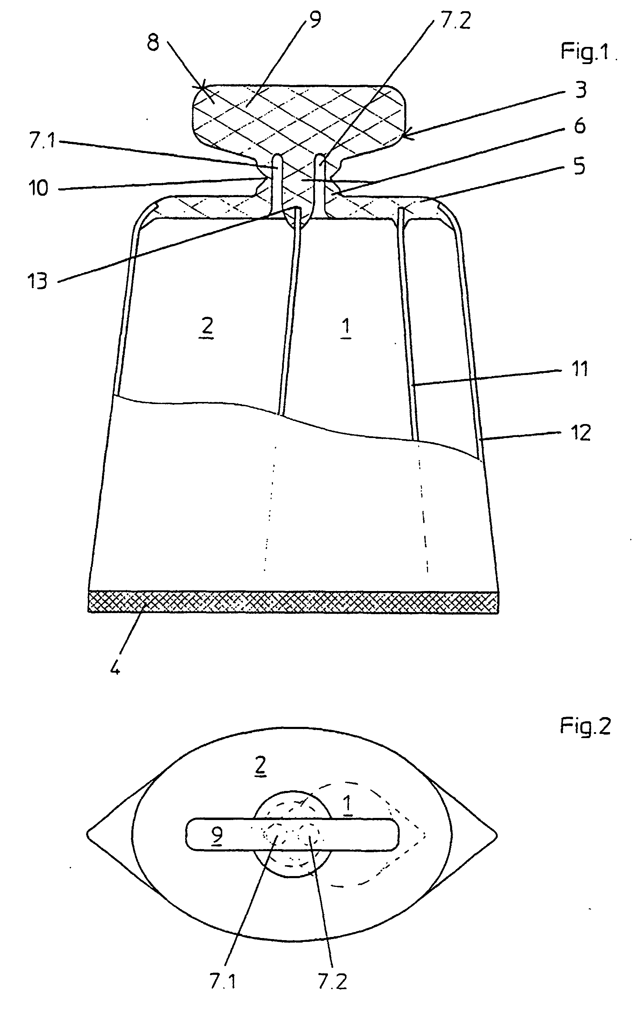

Der in Fig. 1 dargestellte Zweikammerbehälter in Form einer Einmalverpackung für aus zwei getrennt voneinander aufzubewahrenden aber gemeinsam zu verwendenden Komponenten weist eine innere Kammer 1 und eine sie umhüllende äußere Kammer 2, ein Kopfstück 3 und eine erst nach dem Befüllen der Kammern 1 und 2 mit unterschiedlichen Füllkomponenten erzeugte Verschlußnaht 4 auf, die am dem Kopfstück 3 gegenüberliegenden Ende die Kammern 1, 2 diese, voneinander trennend, verschließt.

Das Kopfstück 3 weist eine Schulter 5 auf, die gemäß Fig. 2 einen seitlich abgeplatteten runden Querschnitt aufweist, der auch kreisrund oder oval gerundet sein kann. Das Kopfstück 3 weist ferner einen - hier zentralen - Hals 6 auf, in dem zwei Kanäle 7₁, 7₂ ausgeführt sind, von denen je einer mit einer der Kammern 1 bzw. 2 verbunden ist. An den Hals 6 schließt sich ein Verschluß 8 an, der im Ausführungsbeispiel als Abdrehverschluß 9 ausgeführt ist. Um das Abdrehen zu erleichtern, ist eine Sollbruchstelle 10 ganz oder teilweise umlaufend am Hals 6 ausgeführt. Vorzugsweise ist der Abdrehverschluß 9 derart ausgeführt, daß er, wenn er betätigt ist, und dadurch die Öffnungen der Kanäle 7₁, 7₂ freilegt, mit dem Kopfstück 3 verbunden bleibt, d. h. nicht extra entsorgt werden muß.

Die Kammer 1 ist aus einem Folienschlauch 11 mit kleineren Durchmesser und die äußere umhüllende Kammer 2 aus einem Folienschlauch 12 mit größerem Durchmesser hergestellt. Der Folienschlauch 11 ist, wie aus Fig. 1 und 2 gut erkennbar ist, mit einem Teil seiner Wandung am hier zentral angeordneten Zwischenstück 13, in dem die Kanäle 7₁, 7₂ ausgeführt sind, diese voneinander trennend derart befestigt, daß jede Kammer 1, 2 nur mit einem Kanal 7₁ oder 7₂ verbunden ist.

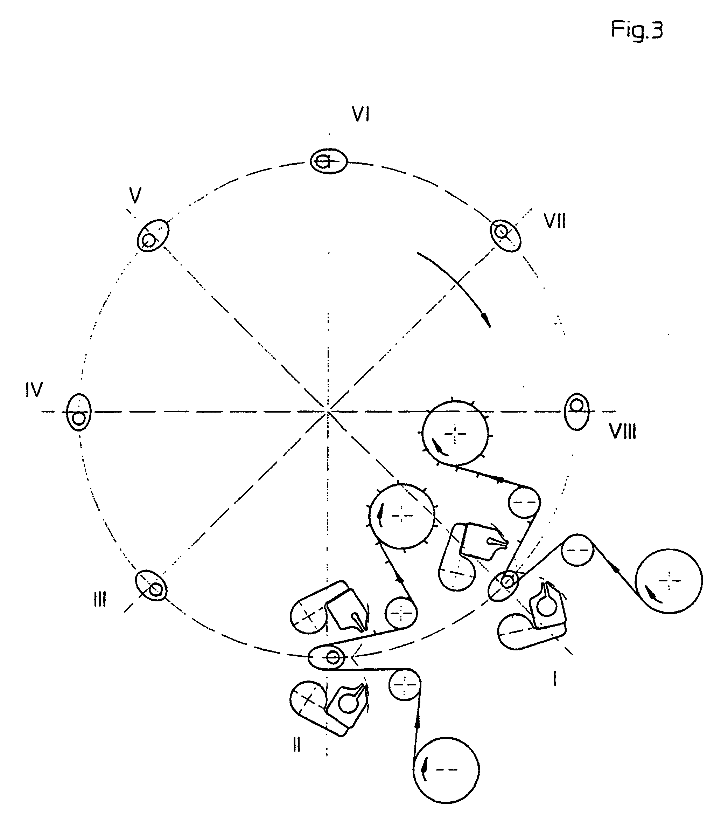

Aus Fig. 3 sind die Arbeitsstationen zur Herstellung eines Zweikammerbehälters, wie er beispielsweise oben beschrieben ist, ersichtlich. In Position I erfolgt das Wickeln einer Folie um einen Innendorn und das Verschweißen der Folie zu einem Schlauch zur Herstellung der inneren Kammer 1. An der Station II erfolgt das Wickeln einer Folie um einen Außendorn und das Verschweißen zu einem Schlauch durch die Herstellung einer Seitenschweißnaht zur Herstellung der äußeren Kammer 2. An der Station II kann auch der innere Folienschlauch und an der Station I der äußere Folienschlauch hergestellt werden. Dies kann gegebenenfalls auch höhenversetzt erfolgen, wobei dann mindestens beide Schläuche in eine Ebene überführt werden müssen. An der Station III wird eine Materialportion eines, z. B. durch Wärme plastifizierten, Kunststoffes einem Formhohlraum zugeführt. An der Station IV erfolgt das gemeinsame Einführen des Innendorns und des Außendoms mit dem hergestellten Innen- bzw. Außenschlauch in einen Formhohlraum, wo das Kopfstück aus der Materialportion geformt und gleichzeitig mit den beiden in etwa einer Ebene liegenden Schlauchenden verbunden wird. Die Stationen V bis VII können alle oder teilweise als Kühlstationen zum Aushärten und Kühlen des Kopfstücks vorgesehen sein. An der Station VIII wird die Form geöffnet und das fertige Produkt entformt und abtransportiert. Die geschilderte Aufteilung der Herstellungsschritte auf die Stationen ist als beispielsweise anzusehen. Es ist auch eine beliebige andere Verteilung der Arbeitsschritte möglich.

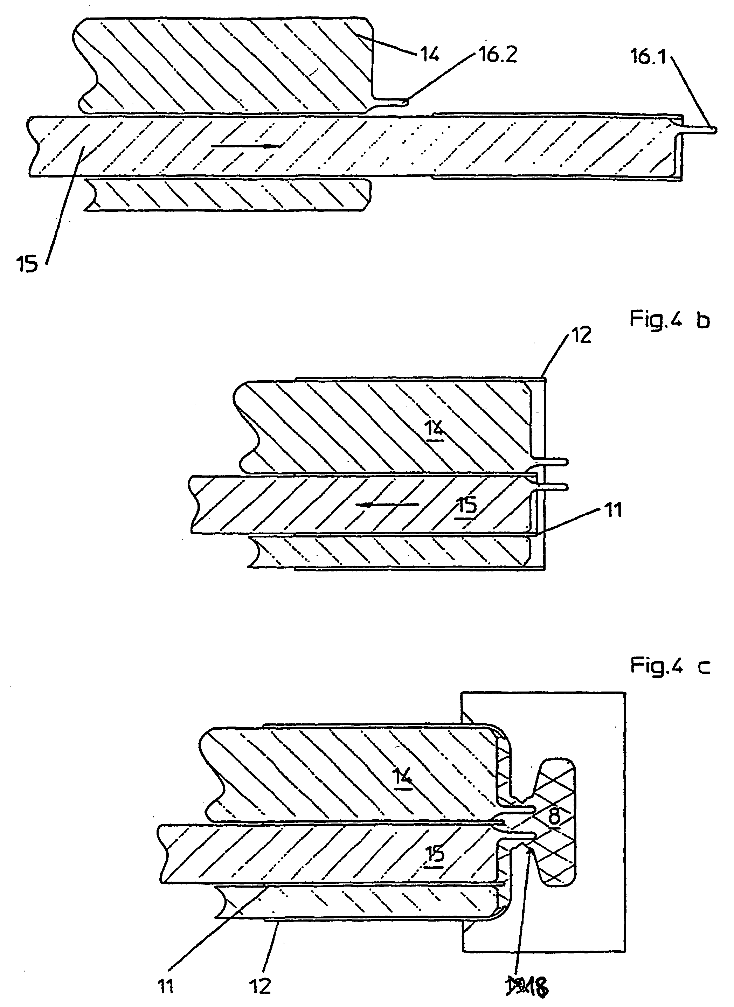

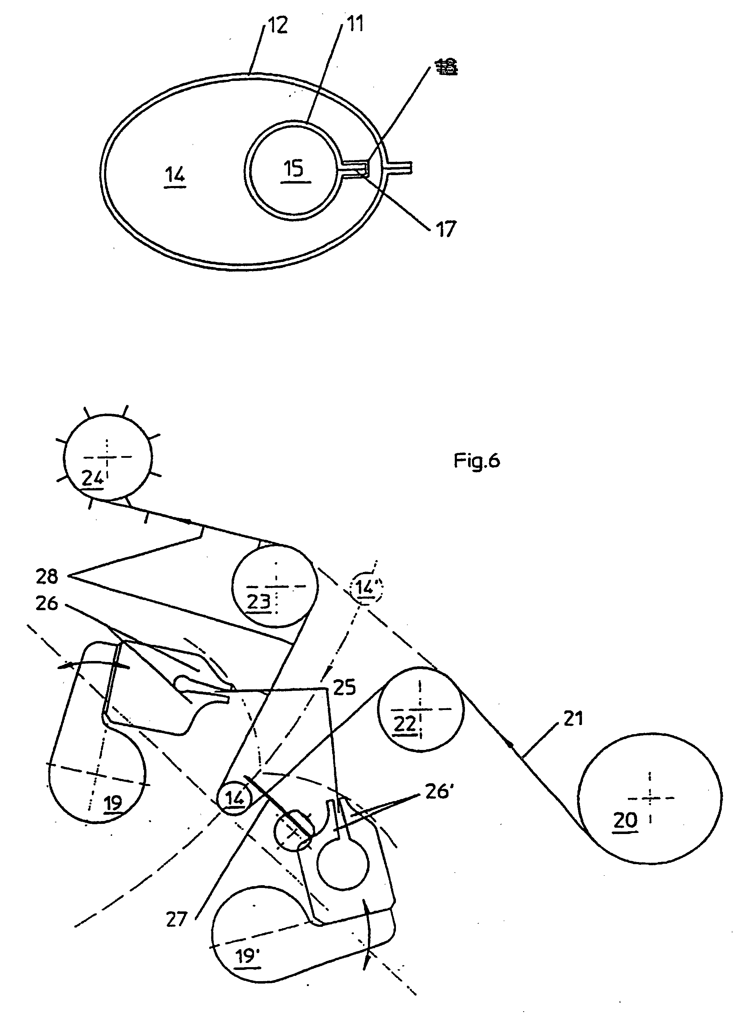

In Fig. 4 ist ein Außendorn 14 dargestellt, in dem ein Innendom 15 aus- und einschiebbar angeordnet ist. Die Außenform des Außendoms 14 entspricht der Innenform der äußeren Kammer 2 und die des Innendorns 15 der der inneren Kammer 1 (s. auch Fig. 5). Der Innendorn 15 als auch der Außendom 14 weisen zylindrische Dornvorsprünge 16₁, 16₂ auf, die zur Ausbildung der Kanäle 7₁, 7₂ (s. Fig. 1) im anzuformenden Kopfstück 3 vorgesehen sind. Wenn der Innendom 15 in Richtung des Pfeils in Fig. 4a aus dem Außendorn 14 in seine äußere Endposition ausgefahren ist, wird um den ausgefahrenen Innendorn 15 ein Folienband bzw. ein Abschnitt davon zu einem Schlauch gewickelt, der durch eine Seitennaht 17 vorzugsweise durch Verschweißen verschlossen wird. Die Seitennaht 17 kann als Überlappungsnaht oder - wie dargestellt - als Parallelnaht hergestellt werden, wobei der Anfang und das Ende der Folienumwicklung um den Dorn parallel zueinander ausgerichtet und dann mittels z. B. einer zugeführten Schweißzange miteinander verschweißt wird. Bei einer derartigen Ausführung der Seitennaht 17 mit parallel liegenden Kanten weist der Außendorn eine Vertiefung auf, die zur Aufnahme der etwa radial vorragenden Seitennaht 17 beim Zurückziehen des Innendorns 15 in den Außendorn 14 dient (s. Fig. 4b).

In der in Fig. 4b gezeigten Stellung tragen sowohl der Innendorn 15 als auch der mit einer Seitennaht versehene Außendom 14 Folienschläuche 11, 12, die leicht über die freien Enden der jeweiligen Dorne 14 bzw. 15 vorspringen. Die so mit Folienschläuchen 11, 12 bestückten Dome 14, 15 werden mit ihren freien Enden gemeinsam in einen Formhohlraum 18 zugeführt, der die Außengestalt eines anzuformenden Kopfstücks 3 mit Verschluß 8 wiedergibt. In den Formhohlraum 18 wurde zuvor eine Materialportion eines plastifizierten Kunststoffmaterials, aus dem das Kopfstück 3 hergestellt werden soll, zugeführt. Durch eine Bewegung der Dorne 14, 15 in den Formhohlraum 19 hinein bzw. des Formhohlraums 18 auf die Dome 14, 15 zu oder eine gemeinsame Bewegung von Domen 14, 15 und Formhohlraum 18 aufeinander zu wird das Kopfstück 3 durch Verpressen der Materialportion angeformt. Dabei werden mittels des vorragenden Dornvorsprungs 16₁, der der inneren Kammer 1 zugeordnete Kanal 7₁ und entsprechend durch den Dornvorsprung 16₂ der Kanal 7₂ der äußeren Kammer 2 gebildet.

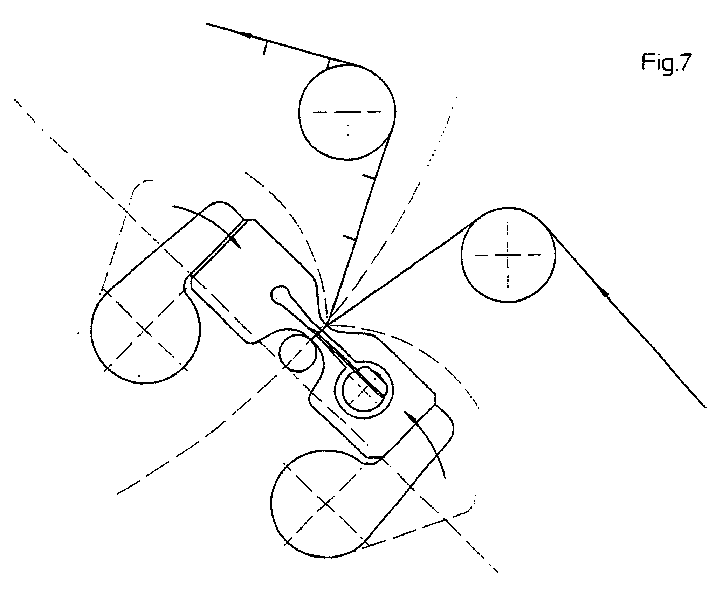

In Fig. 6 und 7 ist in schematischer Weise die Herstellung eines Schlauchs dargestellt. Das dargestellte Herstellungsverfahren eignet sich insbesondere für Folien mit sehr geringer Stärke, z. B. von 75 Mikron (0,075 mm). Ein derartiges auf einer Rolle 20 angeordnetes Folienband 21 wird über zwei drehbare fest angeordnete Umlenkrollen 22, 23 geführt und mit ihrem Anfang auf einer Spule 24 aufgewickelt. Zwischen den beiden Umlenkrollen 22, 23 ist ein, z. B. auf einem Drehteller angeordneter, Dorn 14 bzw. 15 derart einführbar, daß er das Folienband 21 auslenkt (s. Fig. 6) und von ihm zum Teil umhüllt wird. In einer bestimmten Position des Dorns 14 bzw. 15 mit dem ausgelenkten Folienband 21 schwenken die beiden Schweißbacken 19 ein, die eine Form aufweisen, daß eine vollständige Umhüllung des Dorns 14, 15 durch das Folienband 21 bewirkt wird. Jede Schweißbacke 19, 19' weist geteilte, d. h. mit einem Spalt 25 versehene Backenvorsprünge 26 auf. Die Form der Backenvorsprünge 26 ist so gewählt, daß das Folienband 21 vollständig den jeweiligen Dorn 14 bzw. 15 umhüllt und mit zwei Seitenkanten parallel zueinander liegt, die senkrecht zur Dornoberfläche vorstehen. Durch die sich gegenüberliegenden Schweißbacken 19, 19' erfolgt die Verschweißung und Bildung einer Seitennaht 17' der aneinanderliegenden Seitenkanten des Folienbandes 21. Mittels eines in den Spalt 25 zwischen die beabstandeten Backenvorsprünge 26 und 26' einführbaren Messers 27 wird die zwischen den sich gegenüberliegenden Schweißbacken 19, 19' gebildete Seitennaht 17' derart aufgeteilt, daß ein Teil die Seitennaht selbst darstellt und ein Teil mit dem Folienband 21 verbunden bleibt und auf die Spule 24 aufwickelbar ist.

Im gezeigten Ausführungsbeispiel ist im eingeschwenkten Zustand der Schweißbacken 19, 19' die Halterung für das Messer 27 in eine Führung in einer der Schweißbacken 19, 19' einführbar und darin im Spalt 25 beider Schweißbacken 19, 19' auf- und abbewegbar, wobei die zuvor verschweißte Seitennaht 17', wie oben beschrieben, aufgeteilt wird.

Bei einem Wegschwenken der Schweißbacken 19, 19' vom Dorn 14, 15 weg ist der nun mit einem Schlauch 11, 12 versehene Dorn 14, 15 zur nächsten Arbeitsstation transportierbar. Durch den Antrieb der Spule 24 wird mit den abgetrennten Seitennahtteilen 28 das verbundene Folienband 21 zwischen den Umlenkrollen 22, 23 gespannt (gestrichelte Linie in Fig. 6). Von der Spule 20 wird ein weiterer Abschnitt des Folienbandes 21 abgespult, der dann wieder von dem z. B. auf dem Drehtisch nachfolgenden Dom 14' (Fig. 6), wie oben beschrieben, umschlungen und mit einer Seitenschweißnaht 17' versehen werden kann. Durch die Aufteilung der gebildeten Seitennaht 17' bleibt ein zusammenhängendes Band bestehen, das schrittweise auf die Spule 24 aufwickelbar ist und teilweise aus dem frischen Folienband 21 und teilweise aus einem gestückelten, die Seitennahtteile 28 aufweisenden, Bandabschnitt besteht.

Der Vorteil dieser Lösung besteht darin, daß trotz des Durchtrennens der Seitennaht 17' durch das Messer 27 immer ein zusammenhängendes Band besteht, das mit einer kontrollierbaren Spannung durch Zug (Spule 24) und gegebenenfalls unter zusätzlicher Bremsung der Spule 20 geführt werden kann.

Die entsprechenden Schweißvorrichtungen und Folienrührungen können zur Herstellung des Innenschlauchs bzw. des Außenschlauchs in unterschiedlicher Höhe angeordnet, höhenverstellbar sein und/oder gegebenenfalls auch axial wegfahrbar oder wegschwenkbar angeordnet sein.

Bei ausreichender Steifigkeit z. B. einer stärkeren, dickeren Folie kann auch ein Wickeln um einen Dorn erfolgen, wobei dann auch eine Überlappungsnaht (nicht dargestellt) vorgesehen sein kann, die verklebt z. B. durch Auftragen eines Klebstoffs oder eines zweiseitig klebenden Bandes oder verschweißt hergestellt werden kann, wozu geeignete Zuführ- und Kleb- oder Schweißvorrichtungen und gegebenenfalls auch Schneidvorrichtungen vorzusehen wären, welche alle einem Fachmann geläufig sind, so daß sie hier nicht näher beschrieben werden.

## Patentansprüche

1. Vorrichtung zur Herstellung von Zweikammerbehältern mit einem Innendorn (15) und einem Außendorn (14) mit größerem Durchmesser, wobei der innendorn (15) im Außendorn (14) ein- und ausfahrbar angeordnet ist, einem Formhohlraum (18) für ein Kopfstück (3) und einem Materialgeber zur Zufuhr einer erwärmten Materialportion eines thermoplastischen Kunststoffes in den Formhohlraum (18) einer Pressform,
**dadurch gekennzeichnet,**
**daß** sie eine Einrichtung zum Aufwickeln einer Folie um den ausgefahrenen Innendorn (15) und eine Einrichtung zum Aufwickeln einer Folie um den Außendorn (14) sowie zustellbare Schweißeinrichtungen (19) zur Herstellung von Seitenlängsnähten (17) zur Herstellung von Schläuchen (11, 12) aufweist, wobei die Dorne (14, 15) gemeinsam in den Formhohlraum (18) der Preßform zur Herstellung des Kopfstücks (3) mit Verschluß (8) und zur Verbindung mit den Wandungen der gebildeten Kammern (1, 2) ein- und ausführbar sind, und daß jeder Dorn (14, 15) in Richtung des Formhohlraums (18) einen Vorsprung (16₁, 16₂) zur Bildung eines mit je einer Kammer (1 bzw. 2) verbundenen Kanals (7₁ bzw. 7₂) im Kopfstück (3) aufweist.

2. Vorrichtung nach Anspruch 1,
**dadurch gekennzeichnet,**
**daß** die zustellbare Schweißeinrichtung zwei sich gegenüberliegende verschwenkbare Schweißbacken (19, 19') aufweist, die jeweils zwei durch einen Spalt (25) geteilte Backenvorsprünge (26, 26') aufweisen, wobei in den gemeinsamen Spalt (25) eine Schneidvorrichtung (27) ein- und ausführbar ist.

## Claims

1. An apparatus for manufacturing twin-chambered containers having an inner core (15) and an outer core (14) with a larger diameter, the inner core (15) being disposed retractably and extensibly in the outer core (14), a mould cavity (18) for a head piece (3) and a material supply device for the supply of a heated portion of material of the thermoplastic synthetic material into the mould cavity (18) of a mould,
**characterised in that** it comprises a device for winding a foil around the extended inner core (15) and a device for winding a foil around the outer core (14) and also advanceable welding devices (19) for producing lateral longitudinal seams (17) for the production of tubes (11, 12), wherein the cores (14, 15) can be together withdrawn into and extended from the mould cavity (18) of the mould for the production of the head piece (3) with closure (8) and for connection with the walls of the formed chambers (1, 2)
and **in that** each core (14, 15) in the direction of the mould cavity (18) comprises a protuberance (16₁, 16₂) for forming a channel (7₁ and 7₂), each connected to a chamber (1 or 2), in the head piece (3).

2. An apparatus according to Claim 1,
**characterised in that** the advanceable welding device comprises two mutually opposite, swivelling welding jaws (19, 19'), which each comprise two jaw extensions (26, 26') divided by a gap (25), with it being possible to insert a cutting device (27) into the common gap (25) and to withdraw it.

## Revendications

1. Dispositif de fabrication de récipients à deux chambres avec un mandrin intérieur (15) et un mandrin extérieur (14) de diamètre accru, le mandrin intérieur (15) étant agencé dans le mandrin extérieur (14) de sorte à pouvoir être rentré dans celui-ci et sorti de celui-ci, un espace creux de formage (18) pour une pièce de tête (3) et un dispositif de transfert de matériau destiné à amener une partie de matériau chauffé d'un thermoplastique dans l'espace creux de formage (18) d'un moule,
**caractérisé en ce qu'**il comporte un dispositif destiné à enrouler une feuille autour du mandrin intérieur sorti (15) et un dispositif destiné à enrouler une feuille autour du mandrin extérieur (14) ainsi que des dispositifs de soudage à déplacement (19) destinés à établir des soudures latérales longitudinales (17) pour la fabrication de tuyaux (11, 12), les mandrins (14, 15) pouvant être rentrés ensemble dans l'espace creux de formage (18) du moule et sortis de celui-ci pour fabriquer la pièce de tête (3) avec la fermeture (8) et pour établir la liaison avec les parois des chambres formées (1, 2), chaque mandrin (14, 15) comportant en direction de l'espace creux de formage (18) une saillie (16₁, 16₂) pour former un canal (7₁ ou 7₂) relié respectivement à une chambre (1 ou 2) dans la pièce de tête (3).

2. Dispositif selon la revendication 1, **caractérisé en ce que** le dispositif de soudage à déplacement comporte deux mâchoires de soudage opposées à pivotement (19, 19'), comportant respectivement deux saillies de mâchoire (26, 26') séparées par une fente (25), un dispositif de coupe (27) pouvant être rentré dans la fente commune (25) et sorti de celle-ci.
